# EUROPÄISCHE PATENTSCHRIFT

(11) **EP 2 409 800 B1**
(45) Veröffentlichungstag und Bekanntmachung des Hinweises auf die Patenterteilung: **26.08.2015**
(21) Anmeldenummer: 11005856.7
(22) Anmeldetag: 18.07.2011
(51) Int. Cl.: B23C 5/00, B23C 5/08, B23C 5/22, F16B 2/14, E21C 35/19, F16B 5/00

(54) **Rotierendes Schneidwerkzeug**
Rotating cutting tool
Outil de coupe rotatif

(30) Priorität: 19.07.2010 AT 4542010
(43) Veröffentlichungstag der Anmeldung: 25.01.2012
(73) Patentinhaber: Ceratizit Austria GmbH, 6600 Reutte (AT)
(72) Erfinder: Hosp, Andreas, 6622 Berwang (AT)

(56) Entgegenhaltungen:
- AT-B- 72 995
- AT-B- 79 415
- DE-A1-102007 013 153
- DE-C1- 4 101 561
- US-A- 1 278 630

## Beschreibung

Die Erfindung betrifft ein rotierendes Schneidwerkzeug mit einem Grundkörper, an dem mindestens ein Segment auswechselbar befestigt ist, wobei der Grundkörper und das Segment Passelemente mit gegenseitigen Anlageflächen aufweisen.

Schneidwerkzeuge dieser Art sind bekannt und sollen ein problemloses und rasches Auswechseln der Segmente, die vielfach mit Schneideinsätzen bestückt sind, ermöglichen.

Die DE OS 14 27 052 beschreibt einen Scheibenfräser der am Umfang eines Grundkörpers mehrere Segmente aufweist, die mit Schneideinsätzen bestückt sind und durch Verschrauben mit dem Grundkörper lösbar verbunden sind. An der Kontaktstelle der einzelnen Segmente zueinander ist in den Grundkörper eine schwalbenschwanzförmige Nut eingearbeitet, in welche Keile eingeschoben werden, welche die in Drehrichtung rückwärtigen Enden der einzelnen Segmente stützen, wobei die in Drehrichtung rückwärtigen Flanken der Keile und die anliegenden Flanken der entsprechenden Aussparungen in den Segmenten schräg hinterschnitten sind. Die gegenüberliegenden Flanken hingegen sind rechtwinkelig ausgeführt.

Zur seitlichen Führung der Segmente ist der Grundkörper mittig mit einer stegförmigen Passleiste mit trapezförmigem Querschnitt versehen, welche in eine entsprechend ausgeführte Ausnehmung der einzelnen Segmente eingreift. Die einseitig schwalbenschwanzförmig ausgeführten Keile dienen dabei lediglich zur Mitnahme der Segmente bei der Drehbewegung des Fräsers zur Entlastung der Schraubenverbindung. Die Befestigung der Segmente am Grundkörper ist jedoch nur zusammen mit den Schrauben möglich. US 1,278,630, die ein rotierendes Schneidwerkzeug mit den Merkmalen des Oberbegriffs des Anspruchs 1 offenbart, beschreibt ein Kreissägeblatt mit einer Mehrzahl von beabstandeten Vorsprüngen, wobei jeweils eine Kante jedes Vorsprungs hinterschnitten ist. Mehrere L-förmige, gezahnte Abschnitte, die an ihren Außenkanten Zähne haben, haben jeweils einen hinterschnittenen Fortsatz, der dazu angepasst ist, mit einem hinterschnittenen Vorsprung des Kreissägeblatts zusammenzupassen. Ein Keil ist jeweils zwischen einer Wand eines gezahnten Abschnitts, der Wand eines Vorsprungs des Kreissägeblattes und der Wand eines angrenzenden gezahnten Abschnitts angeordnet.

Aufgabe der vorliegenden Erfindung ist es daher, ein rotierendes Schneidwerkzeug zu schaffen, bei welchem Segmente am Grundkörper auf einfache Weise leicht auswechselbar mit einem Klemmstück ohne direkte Schraubverbindung befestigt werden können.

Die Aufgabe wird durch ein rotierendes Schneidwerkzeug gemäß Anspruch 1 gelöst. Durch die doppelseitig schwalbenschwanzförmige Ausführung des Klemmstückes die einerseits in eine Ausnehmung des Grundkörpers und andererseits in die Ausnehmung des Segmentes eingreift, verbunden mit der keilförmigen Ausführung des Klemmstückes in der Axialrichtung A wird eine sichere Verbindung zwischen Segment und Grundkörper erreicht, ohne dass zusätzliche Sicherungsmittel notwendig sind. Das Klemmstück wird dabei solange in Axialrichtung A in keilförmig zulaufender Richtung verschoben, bis es ausreichend stark verklemmt ist. Durch die Passelemente mit den gegenseitigen Anlageflächen zwischen Grundkörper und Segment wird eine exakt sichere Positionierung zwischen Grundkörper und den einzelnen Segmenten gewährleistet, die auch durch das Einbringen des Klemmstückes nicht verändert wird. Durch Verschieben des Klemmstückes entgegen der keilförmig zulaufenden Richtung wird die Verbindung zwischen Grundkörper und Segment auf einfache Weise wieder gelöst und die Segmente können vom Grundkörper entfernt werden.

In einer besonders vorteilhaften Ausgestaltung der Erfindung sind die Passelemente stegförmig mit einer im Wesentlichen in der Axialrichtung A verlaufenden ersten Anlagefläche und einer im Wesentlichen senkrecht zur Axialrichtung A verlaufenden zweiten Anlagefläche an jeweils gegenüberliegenden Randbereichen des Grundkörpers und des Segmentes ausgeführt.

Auf diese Weise wird eine gute sichere Positionierung von Grundkörper und Segment zueinander erreicht, wobei die Passelemente einfach zu fertigen sind. Das Klemmstück ist in Axialrichtung A von einer Schraube durchsetzt, die mit dem Grundkörper oder dem Segment verschraubbar ist. Besonders vorteilhaft dabei ist es, wenn die Schraube zwei Gewindeabschnitte mit gleicher Gewinderichtung aber unterschiedlicher Gewindesteigung aufweist.

Durch diese Ausführung wird durch das Einschrauben der Schraube auf einfache Weise eine gute Verkeilung des Klemmstückes in den Ausnehmungen des Grundkörpers und des Segmentes erreicht, welche dann durch das Ausschrauben der Schraube problemlos wieder gelöst werden kann.

Für die schwalbenschwanzförmigen Teile des Klemmstückes hat es sich bewährt, wenn diese miteinander einen Winkel α einschließen, der in einem Bereich von 120° bis 160° liegt.

Für die Konizität in axialer Richtung des Klemmstückes hat es sich bewährt, dass der Winkel β mit dem das Klemmstück in Axialrichtung A keilförmig zusammenläuft, in einem Bereich von 8° bis 16° liegt.

Besonders vorteilhaft kommt die vorliegende Erfindung bei einem Scheibenfräser mit umfangsseitig oder innenliegend angeordneten Segmenten zur Anwendung, wobei die Segmente als Kassetten mit auswechselbar befestigten Schneideinsätzen ausgeführt sind.

Im Folgenden wird die Erfindung an Hand von Zeichnungen näher erläutert.
Es zeigen:
- Figur 1: den Ausschnitt eines Scheibenfräsers mit umfangsseitig angeordneten Kassetten mit Schneideinsätzen in Schrägansicht, teilweise geschnitten
- Figur 2: den vergrößerten Ausschnitt des Scheibenfräsers nach Fig. 1 in rückseitiger Ansicht
- Figur 3: den Schnitt S-S entsprechend Fig. 2
- Figur 4: einen Scheibenfräser mit innenliegend angeordneten Kassetten mit Schneideinsätzen

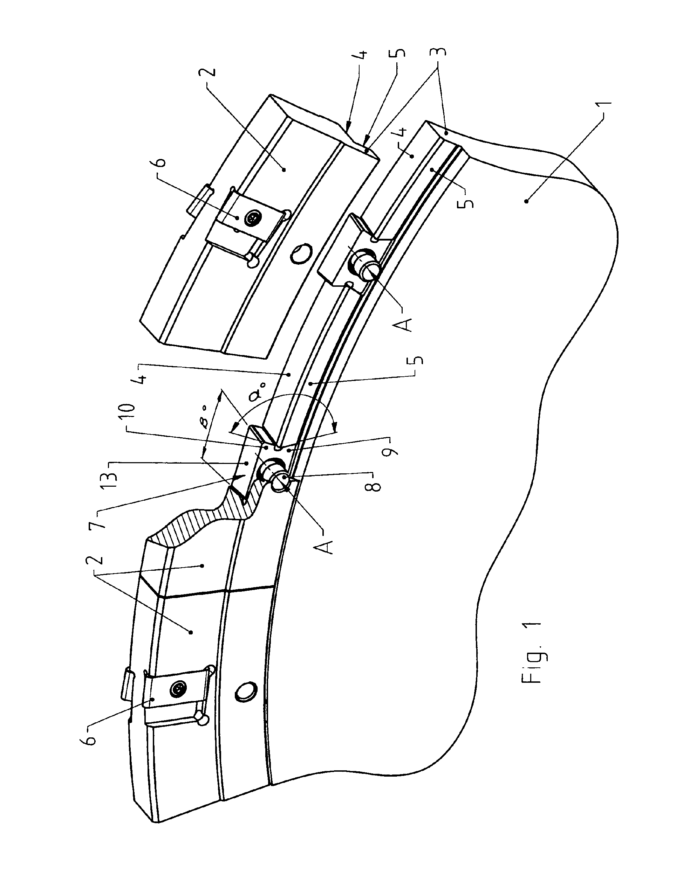

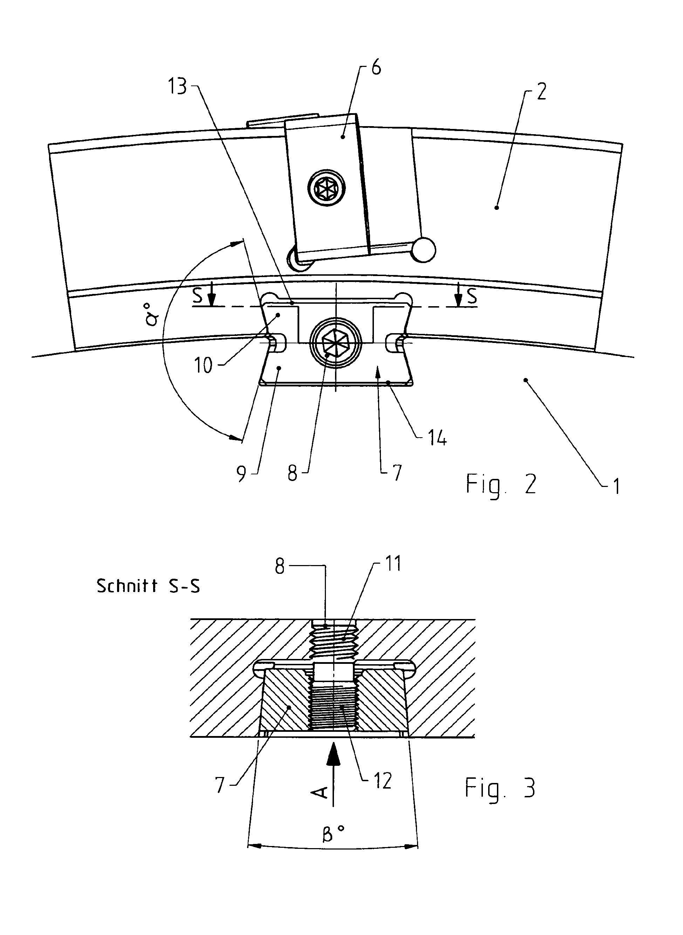

In den Figuren 1 bis 3 ist die Umsetzung der Erfindung am Beispiel eines Scheibenfräsers mit umfangsseitig angeordneten, auswechselbaren Kassetten mit Schneideinsätzen näher beschrieben, wobei nur ein Randbereich des Scheibenfräsers ausschnittsweise dargestellt ist. Der Grundkörper -1- des Scheibenfräsers weist umfangsseitig auf einer Seite am Randbereich ein stegförmiges Passelement -3- mit einer ersten Anlagefläche -4- und einer zweiten Anlagefläche -5- auf. Umfangsseitig sind mehrere Segmente -2- in Form von Kassetten mit Schneideinsätzen -6- auswechselbar mit dem Grundkörper -1- verbunden. Die Segmente -2- weisen umfangsseitig am Randbereich in der Kontaktzone zum Grundkörper -1- ebenfalls stegförmige Passelemente -3- mit einer ersten Anlagefläche -4- und einer zweiten Anlagefläche -5- auf. Diese stegförmigen Passelemente -3- von Grundkörper -1- und Segmenten -2- sind auf jeweils gegenüberliegenden Seiten angeordnet, so dass die stegförmigen Passelemente -3- von Grundkörper -1- und Segmenten -2- in die entsprechenden, daneben liegenden Ausnehmungen eingreifen und jeweils an den gegenseitigen ersten Anlageflächen -4- und zweiten Anlageflächen -5- anliegen, wodurch eine fluchtende Positionierung der Segmente -2- mit dem Grundkörper -1- erreicht wird. Jeweils im Mittelbereich der Segmente -2- ist ein zweiseitig schwalbenschwanzförmig ausgeführtes Klemmstück -7- angeordnet. Das Klemmstück -7- hat eine Dicke die etwa der Dicke des stegförmigen Passelementes -3- des Grundkörpers -1- entspricht und greift mit einem ersten schwalbenschwanzförmigen Teil -9- in eine entsprechende Ausnehmung des Passelementes -3- des Grundkörpers -1 ein, während der zweite schwalbenschwanzförmige Teil -10- in eine entsprechende Ausnehmung im darüberliegenden Bereich des jeweiligen Segmentes -2- eingreift.

Die beiden schwalbenschwanzförmigen Teile -9-, -10- schließen einen Winkel α von 150° miteinander ein. In Axialrichtung A ist das Klemmstück -7- mit einem Winkel β von 8° keilförmig zusammenlaufend ausgeführt.

Das Klemmstück -7- ist in Axialrichtung A von einer Schraube -8- durchsetzt, welche zwei Gewindeabschnitte -11- und -12- mit gleicher Gewinderichtung aber unterschiedlicher Gewindesteigung aufweist. Der Gewindeabschnitt -11-mit der größeren Gewindesteigung greift in eine entsprechende Gewindebohrung des jeweiligen Segmentes -2- ein, während der Gewindeabschnitt -12- mit der kleineren Gewindesteigung in eine entsprechende Gewindebohrung des Klemmstückes -7- eingreift.

Auf diese Weise wird beim Verdrehen der Schraube -8- ein rasches Verkeilen und Lösen des Klemmstückes -7- in der entsprechenden Ausnehmung des Grundkörpers -1- und des jeweiligen Segmentes -2- erreicht. Gleichzeitig kann eine ausreichend große Kraft auf das Klemmstück -7- aufgebracht werden, so dass ein sicheres Verklemmen gewährleistet ist.

Wichtig für ein gutes Verkeilen und eine sichere Positionierung von Grundkörper -1- und Segmenten -2- ist, dass die von den schwalbenschwanzförmig hinterschnittenen Flanken eingeschlossenen Stirnflächen -13- und -14- der schwalbenschwanzförmigen Teile -9- und -10-in den entsprechenden Ausnehmungen von Grundkörper -1- und Segment -2-freigestellt sind. Auf diese Weise wird eine geringfügige Möglichkeit der automatischen Ausrichtung des Klemmstückes -7- beim Einbringen in die Ausnehmungen gewährleistet, wodurch eine Überbestimmung des Klemmsystems und damit eine unbestimmte Klemmung ausgeschlossen wird.

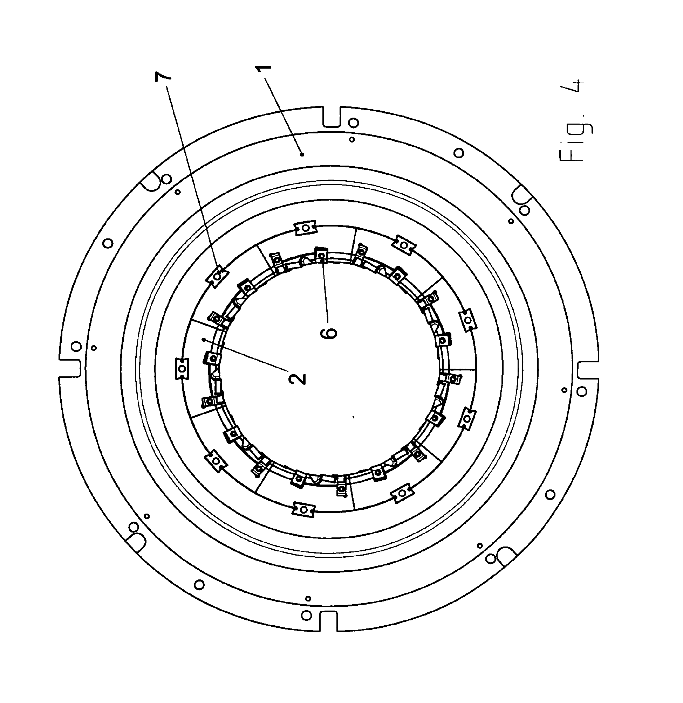

Figur 4 zeigt einen Scheibenfräser, bei dem im Gegensatz zum Scheibenfräser nach den Figuren 1 bis 3, die als Kassetten mit Schneideinsätzen -6-ausgeführten Segmente -2- nicht umfangsseitig, sondern innenliegend ausgeführt sind.

Die Erfindung ist aber keinesfalls auf Scheibenfräser beschränkt, sondern kann ebenfalls bei anderen rotierenden Schneidwerkzeugen, wie Schaftfräsern oder auch bei Bohrwerkzeugen, zur Anwendung kommen.

## Patentansprüche

1. Rotierendes Schneidwerkzeug mit einem Grundkörper (1), an dem mindestens ein Segment (2) auswechselbar befestigt ist, wobei der Grundkörper (1) und das Segment (2) Passelemente (3) mit gegenseitigen Anlageflächen (4,5) aufweisen,
**dadurch gekennzeichnet,**
**dass** die auswechselbare Befestigung durch ein zweiseitig schwalbenschwanzförmig ausgeführtes Klemmstück (7) erfolgt, welches in einer Axialrichtung (A) keilförmig zulaufend ausgeführt ist, wobei der erste schwalbenschwanzförmige Teil (9) des Klemmstückes (7) in eine entsprechende Ausnehmung des Grundkörpers (1) und der zweite schwalbenschwanzförmige Teil (10) des Klemmstückes (7) in eine entsprechende Ausnehmung des Segmentes (2) eingreift,
**dadurch gekennzeichnet, dass** das Klemmstück (7) in der Axialrichtung (A) von einer Schraube (8) durchsetzt ist, die mit dem Grundkörper (1) oder dem Segment (2) verschraubbar ist.

2. Rotierendes Schneidwerkzeug nach Anspruch 1, **dadurch gekennzeichnet, dass** die Passelemente (3) stegförmig mit einer im Wesentlichen in der Axialrichtung (A) verlaufenden ersten Anlagefläche (4) und einer im Wesentlichen senkrecht zur Axialrichtung (A) verlaufenden zweiten Anlagefläche (5) an jeweils gegenüberliegenden Randbereichen des Grundkörpers (1) und des Segmentes (2) ausgeführt sind.

3. Rotierendes Schneidwerkzeug nach Anspruch 1 oder 2, **dadurch gekennzeichnet, dass** die Schraube (8) zwei Gewindeabschnitte (11,12) mit gleicher Gewinderichtung aber unterschiedlicher Gewindesteigung aufweist.

4. Rotierendes Schneidwerkzeug nach einem der Ansprüche 1 bis 3,
**dadurch gekennzeichnet, dass** der Winkel α den die zwei schwalbenschwanzförmigen Teile (9,10) des Klemmstückes (7) miteinander einschließen, in einem Bereich von 120° bis 160° liegt.

5. Rotierendes Schneidwerkzeug nach einem der Ansprüche 1 bis 4,
**dadurch gekennzeichnet, dass** der Winkel β mit dem das Klemmstück (7) in der Axialrichtung (A) keilförmig zusammenläuft in einem Bereich von 8° bis 16° liegt.

6. Rotierendes Schneidwerkzeug nach einem der Ansprüche 1 bis 5,
**dadurch gekennzeichnet, dass** das Schneidwerkzeug ein Scheibenfräser mit umfangsseitig oder innenliegend angeordneten Segmenten (2) ist, wobei die Segmente (2) als Kassetten mit auswechselbar befestigten Schneideinsätzen ausgeführt sind.

## Claims

1. A rotating cutting tool with a main body (1), to which at least one segment (2) is exchangeably fastened, the main body (1) and the segment (2) having fitting elements (3) with mutually contacting faces (4, 5),
**characterized**
**in that** the exchangeable fastening takes place by a clamping piece (7), which is dovetailed on two sides and is configured such that it tapers in wedge form in an axial direction A, the first dovetail-shaped part (9) of the clamping piece (7) engaging in a corresponding recess of the main body (1) and the second dovetail-shaped part (10) of the clamping piece (7) engaging in a corresponding recess of the segment (2), **characterized in that** the clamping piece (7) is passed through in the axial direction A by a screw (8), which can be screwed to the main body (1) or the segment (2).

2. The rotating cutting tool according to Claim 1, **characterized in that** the fitting elements (3) are configured in the form of webs with a first contacting face (4), running substantially in the axial direction A, and a second contacting face (5), running substantially perpendicularly to the axial direction A, on respectively opposing peripheral regions of the main body (1) and of the segment (2).

3. The rotating cutting tool according to Claim 1 or 2, **characterized in that** the screw (8) has two threaded portions (11, 12) with the same thread direction but different thread pitches.

4. The rotating cutting tool according to one of Claims 1 to 3, **characterized in that** the angle α which the two dovetail-shaped parts (9, 10) of the clamping piece (7) together form lies in a range from 120° to 160°.

5. The rotating cutting tool according to one of Claims 1 to 4, **characterized in that** the angle β with which the clamping piece (7) tapers in wedge form in the axial direction A lies in a range from 8° to 16°.

6. The rotating cutting tool according to one of Claims 1 to 5, **characterized in that** the cutting tool is a disc-type milling cutter with segments (2) arranged circumferentially or internally, the segments (2) being configured as cartridges with exchangeably fastened cutting inserts.

## Revendications

1. Outil de coupe rotatif comprenant un corps d'outil (1) sur lequel est fixé au moins un segment (2) interchangeable, outil dans lequel le corps d'outil (1) et le segment (2) sont dotés d'éléments d'ajustage (3) possédant des surfaces de contact (4, 5) réciproque, caractérisé, premièrement, en ce que la fixation amovible est réalisée par le biais d'une pièce de serrage (7) configurée en queue d'aronde sur deux côtés et se rétrécissant en formant un cône dans une direction axiale (A), le premier secteur (9) en queue d'aronde de la pièce de serrage (7) intervenant dans une cavité correspondante ménagée sur le corps d'outil (1) et le second secteur (10) en queue d'aronde de la pièce de serrage (7) intervenant dans une cavité correspondante ménagée sur le segment (2) et, deuxièmement, en ce que la pièce de serrage (7) est traversée dans la direction axiale (A) par un boulon (8) permettant un assemblage boulonné avec le corps d'outil (1) ou le segment (2).

2. Outil de coupe rotatif selon la revendication 1, **caractérisé en ce que** les éléments d'ajustage (3), agencés sur des bords opposés respectivement du corps d'outil (1) et du segment (2), sont réalisés en forme de nervures possédant une première surface de contact (4) qui s'entend pour l'essentiel dans la direction axiale (A) et une seconde surface de contact (5) qui s'entend pour l'essentiel perpendiculairement à la direction axiale (A).

3. Outil de coupe rotatif selon la revendication 1 ou 2, **caractérisé en ce que** le boulon (8) possède deux secteurs filetés (11, 12) dont le sens de filetage est identique mais le pas de filetage différent.

4. Outil de coupe rotatif selon l'une quelconque des revendications 1 à 3, **caractérisé en ce que** l'angle alpha que forment les deux secteurs (9, 10) de la pièce de serrage (7) est compris entre 120 et 160 degrés.

5. Outil de coupe rotatif selon l'une quelconque des revendications 1 à 4, **caractérisé en ce que** l'angle beta selon lequel la pièce de serrage (7) se rétrécit dans la direction axiale (A) en formant un cône, est compris entre 8 et 16 degrés.

6. Outil de coupe rotatif selon l'une quelconque des revendications 1 à 5, **caractérisé en ce que** ledit outil est une fraise disque dotées de segments (2) agencés soit sur l'extérieur soit sur l'intérieur du disque, lesdits segments étant réalisés en tant que cassettes dotées d'inserts de coupe interchangeables.
